**Europäisches Patentamt**

**European Patent Office**

**Office européen des brevets**

(19)

(11) Numéro de publication : **0 278 827 B1**

(12) # FASCICULE DE BREVET EUROPEEN

(45) Date de publication du fascicule du brevet :
**08.04.92 Bulletin 92/15**

(51) Int. Cl.$^5$ : **A01L 1/00,** A01L 5/00

(21) Numéro de dépôt : **88400148.8**

(22) Date de dépôt : **22.01.88**

(54) **Fer à cheval.**

(30) Priorité : **22.01.87 FR 8700732**

(43) Date de publication de la demande :
**17.08.88 Bulletin 88/33**

(45) Mention de la délivrance du brevet :
**08.04.92 Bulletin 92/15**

(84) Etats contractants désignés :
**BE CH DE ES FR GB IT LI NL SE**

(56) Documents cités :
**FR-A- 1 589 671**
**FR-A- 2 262 491**
**FR-A- 2 411 562**
**GB-A- 196 149**

(73) Titulaire : **NEMESIS**
**Le Clos Saint-Fiacre Cuy-Saint-Fiacre**
**F-76220 Gournay en Bray (FR)**

(72) Inventeur : **Rybak, Jean-Jacques**
**Le Clos Saint-Fiacre Cuy-Saint-Fiacre**
**F-76220 Gournay En Bray (FR)**

(74) Mandataire : **Netter, André et al**
**Cabinet NETTER, 40, rue Vignon**
**F-75009 Paris (FR)**

Jouve, 18, rue Saint-Denis, 75001 PARIS

EP 0 278 827 B1

## Description

L'invention concerne un fer à cheval.

On connaît par FR-A-2 262 491 un fer à cheval présentant une face supérieure sensiblement plane destinée à venir en contact, après ferrage, avec le sabot du cheval, et comportant sur une fraction de sa surface une surépaisseur ou nervure destinée à porter sur le sol, le fer possédant sur la partie restante de sa surface une épaisseur faible sensiblement constante, la nervure formant deux branches qui s'écartent latéralement l'une de l'autre vers l'arrière.

Ce fer à cheval connu, comme tous ceux proposés jusqu'ici, doit être forgé pour s'adapter à la forme exacte du sabot destiné à en être équipé.

Cette opération de forgeage suppose, pour le maréchal-ferrant, une formation longue et coûteuse.

Le but de l'invention est de supprimer la nécessité du forgeage.

Ce but est atteint, selon l'invention, dans un fer à cheval du genre défini plus haut, en ce que la partie de faible épaisseur du fer s'étend au-delà des branches de la nervure d'une part latéralement vers l'extérieur et d'autre part latéralement vers l'intérieur, en laissant un espace libre médian entre les deux branches de la nervure, et/ou vers l'arrière, de façon à venir en contact à la fois avec la paroi et avec les barres alors que les branches de la nervure viennent entièrement en regard de la sole.

Dans un tel fer, le fait que la partie mince, et elle seule, vient en contact avec les régions latérales de la paroi et les barres, qui sont les parties rigides du sabot entourant la sole, permet au fer de se déformer en cours d'utilisation, sa face supérieure devenant convexe pour se conformer à la sole plus souple, améliorant ainsi le confort et la stabilité de l'appui du cheval sur le sol. Cette position favorable peut être obtenue en adaptant le fer à la forme du sabot par simple usinage de la partie du fer dont l'épaisseur est faible par rapport à celle du reste du fer comportant la nervure.

Le fer à cheval selon l'invention est de préférence en alliage d'aluminium ou en un matériau présentant des propriétés analogues. Un tel fer peut facilement être usiné à la râpe.

Dans un mode de réalisation, les parties extrêmes postérieures des branches de la nervure sont plus épaisses que le reste de la nervure.

Selon une caractéristique de l'invention, la nervure présente des évidements à partir de sa face inférieure, dont le fond affleure sensiblement à la face inférieure de la partie de faible épaisseur. En particulier, elle peut être formée, sur une partie de sa longueur dans la direction avant-arrière, par des ailettes transversales séparées s'étendant vers le bas à partir de la partie mince, de préférence sensiblement perpendiculairement à la face supérieure du fer.

La nervure peut présenter, en avant des ailettes, une partie pleine d'épaisseur égale à la hauteur des ailettes et, en arrière des ailettes, des parties pleines d'épaisseur supérieure à la hauteur des ailettes.

En variante, un évidement au moins de la nervure peut être limité par une surface en arc traversant le plan vertical médian du fer. En particulier, la nervure peut comprendre une portion avant en forme d'arc, adjacente au bord antérieur du fer et séparée du reste de la nervure par un évidement en arc.

L'invention prévoit également que la nervure peut comprendre au moins une portion arrière en arc limitée vers l'avant par un évidement, cette portion arrière pouvant avoir une forme annulaire et entourer un autre évidement de la nervure.

Dans un fer à nervure évidée, les évidements peuvent être au moins partiellement garnis d'un matériau à propriétés anti-dérapantes et/ou amortissantes.

Par ailleurs, l'épaisseur de la nervure peut croître progressivement de l'avant vers l'arrière. En particulier, l'extrémité avant de la nervure peut former un arrondi adjacent au bord avant de la face supérieure du fer. Une telle configuration anticipe la forme résultant de l'usure du fer en fonctionnement et évite au cheval de trébucher lorsqu'il pose le pied sur le sol.

D'autres caractéristiques et avantages de l'invention ressortiront de la description donnée ci-après de quelques exemples de réalisation, et des dessins annexés dans lesquels :
– les figures 1, 3, 4, 6 et 7 sont des vues de dessous de quatre fers à cheval selon l'invention;
– les figures 2 et 5 sont des vues latérales des fers selon la figure 1 et selon la figure 4 respectivement;
– la figure 8 est une vue en coupe longitudinale du fer de la figure 7.

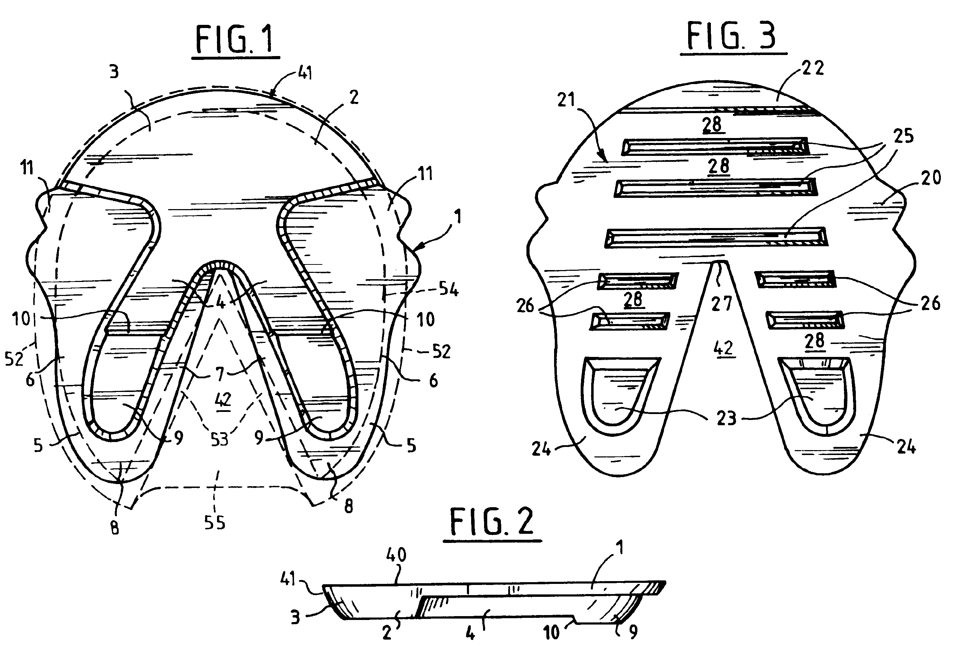

Le fer à cheval représenté aux figures 1 et 2, réalisé en alliage d'aluminium, par exemple en AG3T, présente la forme générale d'une lettre V dont la base est arrondie.

Ce fer présente une face supérieure 40 sensiblement plane, destinée à venir en contact avec le pied du cheval. Il comporte, sur une fraction de sa surface, une surépaisseur 2 appelée nervure destinée à porter sur le sol, et possède dans sa partie restante 1 une épaisseur faible sensiblement uniforme, de l'ordre de 5 mm.

La forme de la nervure 2 rappelle un champignon qui posséderait deux pieds, le chapeau 3 du champignon correspondant à la base arrondie du V et les pieds 4 du champignon formant des branches qui s'écartent latéralement l'une de l'autre vers l'arrière du fer. On voit que la partie mince 1 s'étend latéralement au-delà des branches 4 de la nervure aussi bien vers l'extérieur en 6 que vers l'intérieur, c'est-à-dire d'une branche vers l'autre, en 7. La partie 1 s'étend également en 8 au-delà des extrémités postérieures des branches 4 de la nervure.

L'épaisseur totale du fer à cheval est de l'ordre de 15 mm, cette épaisseur étant un peu plus élevée au droit des parties extrêmes postérieures 9 des branches 4 de la nervure, parties extrêmes qui se raccordent au reste de la nervure par des épaulements 10.

Des pinçons 11 sont prévus sur les côtés du fer.

Les zones minces 6, 7 et 8 permettent une adaptation du fer à la forme exacte du pied du cheval par enlèvement de matière sur une épaisseur réduite par rapport à l'épaisseur totale du fer.

La fixation du fer au sabot du cheval s'effectue par des clous passant dans des trous ou étampures qu'on réalisera en des endroits appropriés de la partie mince. On peut utiliser des clous classiques ou des clous spéciaux à tête plate.

Grâce à la déformabilité de l'alliage constitutif du fer à cheval, la plate-forme se déforme à l'usage pour épouser la surface inférieure du pied du cheval. La forme de la nervure et son épaisseur variable assurent une bonne adhérence au sol.

On a indiqué en trait interrompu à la figure 1 l'extrémité inférieure de la paroi 52 et des barres 53 telles qu'elles se situent après ferrage, la paroi et les barres constituant la partie rigide du sabot qui entoure la sole 54. On voit également la fourchette 55, autre région souple du sabot située à l'intérieur du V formé par les barres 53.

On peut constater sur la figure 1 que les branches 4, qui sont séparées latéralement l'une de l'autre par un intervalle médian, viennent entièrement en regard de la sole 54. Elles n'empêchent donc pas la déformation du fer pour permettre à sa face supérieure 40 de se bomber vers le haut et de venir en contact avec la sole. Pour assurer un appui ferme du fer sur le pied, la zone avant du chapeau 3 de la nervure, adjacente au bord avant 41 du fer, les zones minces latérales extérieures 6 et les zones minces postérieures 8 viennent en appui sur la paroi, tandis que ces mêmes zones 8 et les zones minces latérales intérieures 7 s'appuient sur les barres. Si nécessaire, en fonction de la forme exacte du sabot, il est possible d'éliminer à la râpe une partie des zones minces 6 et/ou 7 et/ou 8. L'espace libre 42 situé entre les zones minces 7 vient en regard de la fourchette 55.

Le fer à cheval de la figure 3 présente un contour semblable à celui du fer des figures 1 et 2, et possède une nervure 21 discontinue dont le contour est celui d'un V à base large et à branches sensiblement rectilignes avec des extrémités libres arrondies. La nervure 21 est composée d'une partie pleine 22 située à l'extrémité avant du fer, de deux talons 23 situés au voisinage de son extrémité arrière et d'ailettes 25 et 26 situées entre la partie avant 22 et les talons 23 et s'étendant transversalement, parallèlement les unes aux autres. Trois nervures 25 sont situées en avant des branches de la nervure, et deux paires d'ailettes 26 constituent avec les talons 23 les branches de la nervure, les ailettes 26 de l'une des branches étant dans le prolongement respectivement des ailettes 26 de l'autre branche. Les parties 22 et 23 et les ailettes 25 et 26 sont séparées les unes des autres, dans la direction longitudinale du fer, par des évidements ou rainures 28 dont les fonds affleurent à la face inférieure de la partie de faible épaisseur 20 du fer.

Le profil des ailettes 25 et 26 est visible à la figure 5, qui représente un fer composite comprenant une pièce moulée identique au fer de la figure 3. Ce profil est trapézoïdal, le plan moyen des ailettes étant perpendiculaire à la face supérieure plane du fer.

L'épaisseur de la partie avant 22 de la nervure est égale à la hauteur des ailettes 25 et 26, et correspond sensiblement à l'épaisseur de la partie antérieure de la nervure du fer des figures 1 et 2. L'épaisseur des talons 23 est supérieure à la hauteur des ailettes et correspond sensiblement à l'épaisseur des parties arrière 9 de la réalisation précédente. Les évidements 28 allègent le fer tout en lui conservant une bonne rigidité.

La partie mince 20, comme celle du fer précédemment décrit, s'étend au-delà de la nervure latéralement, vers l'extérieur et vers l'intérieur, en laissant un espace libre médian 42, et vers l'arrière.

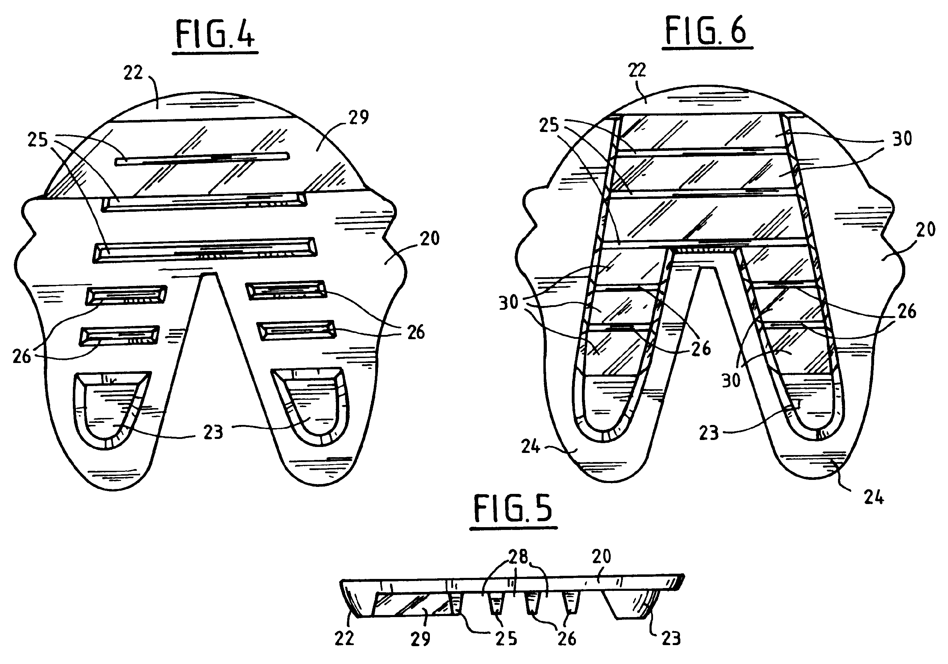

Le fer à cheval des figures 4 et 5 est formé d'une armature métallique identique au fer de la figure 3, et dont les éléments sont désignés par les mêmes références, et d'une masse 29 surmoulée sur cette armature. La masse 29, en un matériau plastique ou élastomère à propriétés anti-dérapantes et amortissantes, améliore encore l'adhérence du fer au sol. Son épaisseur est égale à la hauteur des ailettes 25. Elle remplit l'évidement 28 (figure 3) adjacent à la partie avant 22 de la nervure et celui compris entre les deux premières ailettes 25, et s'étend latéralement jusqu'aux bords du fer.

La figure 6 est relative à une variante, qui diffère de l'objet des figures 4 et 5 uniquement en ce que la masse 29 est remplacée par une masse 30 de même nature, qui remplit la totalité des évidements 28 et ne s'étend pas au-delà du contour en V de la nervure. La masse 30 est donc formée d'autant d'éléments séparés que la nervure 21 comporte d'évidements.

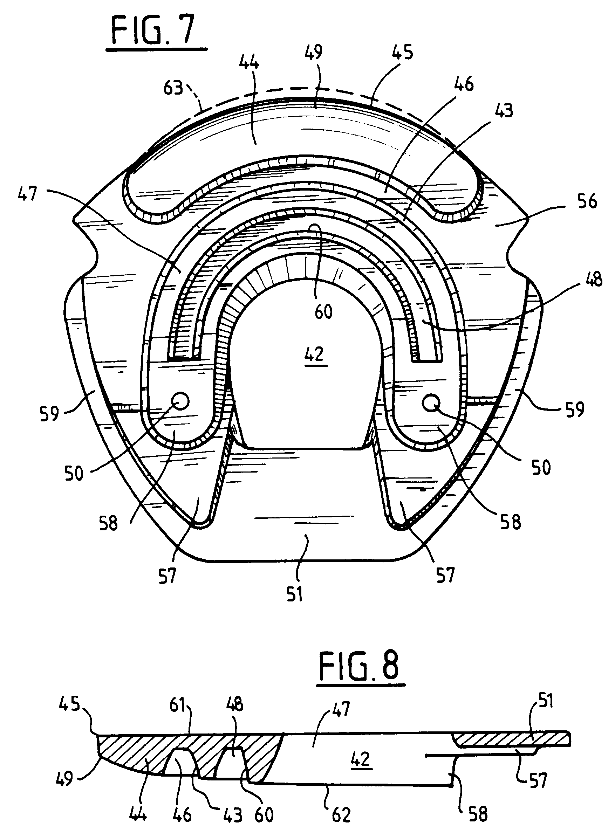

Le fer à cheval des figures 7 et 8 comporte une nervure composée de deux parties 44 et 47 séparées par un évidement 46. La partie 44 est en forme de croissant à extrémités arrondies et s'étend le long du bord antérieur 45 du fer. La partie 47, située en arrière par rapport à la partie 44, a la forme d'un U dont les branches sont tournées vers l'arrière. La partie 56 du fer non couverte par la nervure présente ici encore une épaisseur faible de l'ordre de 5 mm, cette épaisseur étant légèrement accrue en des zones 57 adjacentes aux extrémités arrière 58 des branches de la nervure, et légèrement diminuées en des zones marginales extérieures 59 s'étendant à peu près sur la moitié arrière de la longueur du fer, afin d'obtenir un compromis optimal entre la rigidité, la légèreté et la facilité d'usinage du fer. Par ailleurs, les parties du fer situées en arrière des extrémités 58 des branches de la nervure, ou éponges, sont réunies entre elles par une traverse 51 ayant la même épaisseur que les zones 59. La traverse 51 donne au fer une configuration annulaire entourant un espace libre médian 42. Une telle traverse est utile pour un pied de cheval présentant certaines caractéristiques morphologiques.

La partie de nervure 47 a une configuration annulaire et entoure un évidement 48 également en forme de U. Les fonds des évidements 46 et 48 affleurent à la face inférieure de la partie mince 56 du fer. La partie de nervure 47 est limitée vers l'avant par une face en arc convexe 43 adjacente à l'évidement en arc 46. De même, une face convexe 60 de la nervure limite vers l'arrière l'évidement 48. Ces faces convexes améliorent la résistance à la déformation de la nervure lors de la mise en contact du fer avec le sol.

On voit à la figure 8 que l'épaisseur de la nervure augmente progressivement de l'avant vers l'arrière. A l'avant, un arrondi 49 raccorde le bord avant 45 de la face supérieure plane 61 du fer à la face inférieure 62 de la nervure. L'épaisseur du fer croît rapidement au niveau de cet arrondi, puis croît plus lentement pour se stabiliser à une valeur de l'ordre de 15 mm dans la partie arrière des branches de la nervure. Dans cette partie arrière, en arrière des extrémités de l'évidement 28, des avant-trous 50 sont ménagés dans la face 62 pour la mise en place de crampons, soit directement, soit par l'intermédiaire d'inserts.

Des changements de détail peuvent être apportés aux réalisations décrites sans sortir du cadre de l'invention. Ainsi, le fer peut présenter une nervure pleine ayant un contour en V semblable à celui de la nervure évidée des figures 3 à 6.

Les épaulements 10 limitant vers l'avant les parties épaissies 9 de la nervure aux figures 1 et 2, ainsi que les faces antérieures des talons 23 des figures 3 et suivantes, au lieu d'être sensiblement plans comme représenté, peuvent présenter une courbure convexe et se raccorder sans arête aux faces latérales de ces parties épaissies ou de ces talons.

La partie mince de chacun des fers peut s'étendre quelque peu vers l'avant au-delà de la nervure, comme indiqué en trait interrompu en 63 à la figure 7, pour être rabattue sur la face avant de la paroi comme les pinçons le sont sur les faces latérales.

Il est possible de combiner entre elles les caractéristiques empruntées aux différents fers décrits. Ainsi, une masse anti-dérapante et/ou amortissante analogue à celle des figures 4 à 6 peut être mise en place dans les évidements 46 et 48 des figures 7 et 8. La traverse 51 du fer de ces mêmes figures peut être supprimée, et une traverse analogue peut être ajoutée aux autres fers.

## Revendications

1. Fer à cheval comprenant une armature en un matériau propre à se déformer à l'usage pour épouser la surface inférieure du pied du cheval, et propre à être usiné à la râpe, cette armature présentant une face supérieure (40) sensiblement plane destinée à venir en contact, après ferrage, avec le sabot du cheval, et comportant sur une fraction de sa surface une surépaisseur ou nervure (2) destinée à porter sur le sol, l'armature possédant sur la partie restante (1) de sa surface une épaisseur faible sensiblement constante, la nervure formant deux branches (4) qui s'écartent latéralement l'une de l'autre vers l'arrière, caractérisé en ce que la partie (1) de faible épaisseur de l'armature s'étend au-delà des branches de la nervure d'une part latéralement vers l'extérieur (6) et d'autre part latéralement vers l'intérieur (7), en laissant un espace libre médian (42) entre les deux branches de la nervure, et/ou vers l'arrière (8) de façon à être adaptée pour venir en contact à la fois avec la paroi et avec les barres alors que les branches de la nervure viennent entièrement en regard de la sole.

2. Fer selon la revendication 1, caractérisé en ce que l'armature présente une forme annulaire et comporte une traverse (51) en arrière de l'espace libre médian.

3. Fer selon l'une des revendications 1 et 2, caractérisé en ce que les parties extrêmes postérieures (9) des branches (4) de la nervure sont plus épaisses que le reste de la nervure.

4. Fer selon l'une des revendications précédentes, caractérisé en ce que la nervure présente des évidements (28) à partir de sa face inférieure, dont le fond affleure sensiblement à la face inférieure de la partie de faible épaisseur.

5. Fer selon la revendication 4, caractérisé en ce que la nervure est formée, sur une partie de sa longueur dans la direction avant-arrière, par des ailettes transversales séparées (25,26) s'étendant vers le bas à partir de la partie de faible épaisseur.

6. Fer selon la revendication 5, caractérisé en ce que les ailettes s'étendent sensiblement perpendiculairement à la face supérieure (40).

7. Fer selon la revendication 5 et 6, caractérisé en ce que la nervure présente en avant des ailettes une partie pleine (22) d'épaisseur égale à la hauteur des ailettes et, en arrière des ailettes, des parties pleines (23) d'épaisseur supérieure à la hauteur des ailettes.

8. Fer selon la revendication 4, caractérisé en ce qu'au moins un évidement de la nervure (44,47) est limité par une surface (43) en arc traversant le plan vertical médian du fer.

9. Fer selon la revendication 8, caractérisé en ce que la nervure comprend une portion avant (44) en forme d'arc, adjacente au bord antérieur (45) du fer, séparée du reste de la nervure par un évidement (46) en arc.

10. Fer selon la revendication 8 et 9, caractérisé en ce que la nervure comprend au moins une portion arrière en arc (47) limitée vers l'avant par un évidement (46).

11. Fer selon la revendication 10, caractérisé en ce que ladite portion arrière en arc est annulaire et entoure un évidement (48) de la nervure.

12. Fer selon l'une des revendications 4 à 11, caractérisé en ce que les évidements de la nervure sont au moins partiellement garnis d'un matériau à propriétés antidérapantes et/ou amortissantes (29).

13. Fer selon l'une des revendications précédentes, caractérisé en ce que l'épaisseur de la nervure croît progressivement de l'avant vers l'arrière.

14. Fer selon la revendication 13, caractérisé en ce que l'extrémité avant de la nervure forme un arrondi (49) adjacent au bord avant de la face supérieure (40) du fer.

15. Fer selon l'une des revendications précédentes, caractérisé en ce que des avant-trous (50) sont prévus dans la face inférieure (62) de la nervure pour la mise en place de crampons.

## Claims

1. Horse shoe comprising an armature composed of a material capable of deforming with use so as to marry to the lower surface of the horse's foot, and capable of being worked with a rasp, the armature having a substantially plane upper face (40) intended to come into contact with the horse's hoof after shoeing, and comprising on a fraction of its surface a thickening or reinforcement (2) intended to reach the ground, the armature having on the remaining part (1) of its surface a low, substantially constant thickness, the reinforcement forming two branches (4) which diverge one from another towards the rear, characterised in that the thin part (1) of the armature extends beyond the branches of the reinforcement on the one side laterally towards the outside (6) and on the other side laterally towards the inside (7), leaving a free median space (42) between the two branches of the reinforcement, and/or towards the rear (8), so as to be adapted to come into contact simultaneously with the wall and with the bars, whilst the branches of the reinforcement come entirely opposite the sole.

2. Horse shoe acccording to claim 1, characterised in that the armature has an annular shape and comprises a cross-piece (51) at the rear of the free median space.

3. Horse shoe according to either of claims 1 or 2, characterised in that the extreme rear parts (9) of the branches (4) of the reinforcement are thicker than the rest fo the reinforcement.

4. Horse shoe according to one of the preceding claims, characterised in that the reinforcement has recesses (28) starting from its lower face, the bottom of which substatially touches the lower face of the thin part.

5. Horse shoe according to claim 4, characterised in that the reinforcement is formed on one part of its length in the direction from front to rear by separate transverse fins (25, 26) extending downwards from the thin part.

6. Horse shoe according to claim 5, characterised in that the fins extend substantially perpendicular to the upper face (40).

7. Horse shoe according to either of claims 5 or 6, characterised in that the reinforcement has in front of the fins a solid part (22) of a thickness equal to the height of the fins and, behind the fins, solid parts (23) of a thickness greater than the height of the fins.

8. Horse shoe according to claim 4, characterised in that at least one recess of the reinforcement (44, 47) is limited by an arc-shaped surface (43) traversing the vertical median plane of the horse shoe.

9. Horse shoe according to claim 8, characterised in that the reinforcement comprises a front arc-shaped portion (44) adjacent to the front edge (45) of the horse shoe, separated from the rest of the reinforcement by an arc-shaped recess (46).

10. Horse shoe according to either of claims 8 or 9, characterised in that the reinforcement comprises at least one arc-shaped rear portion (47) limited at the front by a recess (46).

11. Horse shoe according to claim 10, characterised in that said arc-shaped rear portion is annular and surrounds a recess (48) of the reinforcement.

12. Horse shoe according to one of claims 4 to 11, characterised in that the recesses of the reinforcement are at least partly lined with a material (29) with anti-skid and/or sound-damping properties.

13. Horse shoe according to one of the preceding claims, characterised in that the thickness of the reinforcement increases progressively from the front to the back.

14. Horse shoe according to claim 13, characterised in that the front end of the reinforcement forms a quarter-circle (49) adjacent to the front edge of the upper face (40) of the horse shoe.

15. Horse shoe according to one of the preceding claims, characterised in that holes (50) are provided in the lower face (62) of the reinforcement for mounting spikes.

## Patentansprüche

1. Hufeisen, bestehend aus einem Beschlag aus einem Werkstoff, der im Gebrauch zur Anpassung an die Innenfläche des Pferdehufes verformbar und der mit einer Raspel zu bearbeiten ist, wobei der Beschlag eine im wesentlichen ebene obere Fläche (40), die zur Berührung mit dem Pferdehuf nach dem Beschlagen bestimmt ist, und auf einem Teil seines Flächeninhalts eine Erhöhung oder Rippe (2), die zur Abstützung auf dem Boden bestimmt ist, sowie im übrigen Bereich (1) des Flächeninhaltseine geringe, im wesentlichen konstante Dicke hat, und wobei die Rippe zwei nach hinten divergierende Zweige (4) bildet, dadurch gekennzeichnet, dass sich der die geringe Dicke aufweisende Bereich (1) des Beschlages einerseits lateral bis zur Aussenseite (6) und andererseits lateral bis zur Innenseite (7) der Zweige der Rippe, unter Freilassung eines mittigen Zwischenraums (42) zwischen den beiden Rippenzweigen, und/oder nach hinten erstreckt, derart, dass zugleich der Kontakt mit der Hornwand und mit dem Tragrand des Hufes herstellbar ist, während sich die Rippenzweige der Hornsohle vollständig gegenüberstellen.

2. Hufeisen nach Anspruch 1, dadurch gekennzeichnet, daß der beschlag ringförmig ist und hinter dem mittigen Zwischenraum eine Querverbindung (51) aufweist.

3. Hufeisen nach Anspruch 1 oder 2, dadurch gekennzeichnet, daß die hinteren Endbereiche (9) der Rippenzweige (4) dicker sind als der übrige Teil der Rippe.

4. Hufeisen nach einem der vorhergehenden Ansprüche, dadurch gekennzeichnet, daß die Rippe von ihrer Unterseite ausgehende Aussparungen (28) aufweist, deren Boden im wesentlichen mit der Unterseite des Bereiches geringer Dicke in einer Ebene liegt.

5. Hufeisen nach Anspruch 4, dadurch gekennzeichnet, daß die Rippe über einen Teil ihrer von vorne nach hinten betrachteten Länge durch voneinander getrennte, quer liegende Stollen (25, 26) gebildet ist, die sich von dem Bereich geringer Dicke aus nach unten erstrecken.

6. Hufeisen nach Anspruch 5, dadurch gekennzeichnet, daß sich die Stollen im wesentlichen senkrecht zu der oberen Fläche (40) erstrecken.

7. Hufeisen nach Anspruch 5 oder 6, dadurch gekennzeichnet, daß die Rippe vor den Stollen einen vollwandigen Bereich (22) gleicher Dicke wie die Stollenhöhe und hinter den Stollen vollwandige Bereiche (23) aufweist, deren Dicke größer ist als die Höhe der Stollen.

8. Hufeisen nach Anspruch 4, dadurch gekennzeichnet, daß mindestens eine Aussparung der Rippe (44, 47) durch eine bogenförmige Fläche (43) begrenzt ist, welche die vertikale Mittelebene des Hufeisens schneidet.

9. Hufeisen nach Anspruch 8, dadurch gekennzeichnet, daß die Rippe einen vorderen bogenförmigen Abschnitt (44) aufweist, der nahe dem vorderen Rand (45) des Hufeisens liegt und von dem übrigen Teil der Rippe durch eine bogenförmige Aussparung (46) getrennt ist.

10. Hufeisen nach Anspruch 8 oder 9, dadurch gekennzeichnet, daß die Rippe mindestens einen hinteren bogenförmigen Abschnitt (47) aufweist, der nach vorne durch eine Aussparung (46) begrenzt ist.

11. Hufeisen nach Anspruch 10, dadurch gekennzeichnet, daß der hintere bogenförmige Abschnitt (47) ringförmig ist und eine Aussparung (48) der Rippe umgibt.

12. Hufeisen nach einem der Ansprüche 4 bis 11, dadurch gekennzeichnet, daß die Aussparungen der Rippe mindestens teilweise mit einem rutschfesten und/oder stoßdämpfenden Material versehen sind.

13. Hufeisen nach einem der vorhergehenden Ansprüche, dadurch gekennzeichnet, daß die Dicke der Rippe von vorne nach hinten progressiv zunimmt.

14. Hufeisen nach Anspruch 13, dadurch gekennzeichnet, daß das vordere Ende der Rippe eine Rundung (49) bildet, die nahe dem vorderen Rand der oberen Fläche (40) des Hufeisens liegt.

15. Hufeisen nach einem der vorhergehenden Ansprüche, dadurch gekennzeichnet, daß in der Unterfläche (62) der Rippe Kernlöcher (50) zum Einsetzen von Spikes vorgesehen sind.

## FIG. 1

## FIG. 3

## FIG. 2

EP 0 278 827 B1

## FIG.4

22

29

25

26

26

20

23

## FIG.6

22

25

30

30

30

26

30

20

26

23

24

24

## FIG.5

28    20

22    29    25    26    23

EP 0 278 827 B1

## FIG. 7

## FIG. 8